# EUROPÄISCHE PATENTSCHRIFT

(11) **EP 3 437 897 B1**
(45) Veröffentlichungstag und Bekanntmachung des Hinweises auf die Patenterteilung: **23.02.2022**
(21) Anmeldenummer: 18187400.9
(22) Anmeldetag: 03.08.2018
(51) Int. Cl.: B60B 27/02, B62K 21/00, B60B 33/02, B60B 33/04, B60B 33/00

(54) **RAD MIT INTEGRIERTEM LENKSYSTEM FÜR FAHRBARE RAHMENGESTELLE**
WHEEL WITH INTEGRATED STEERING SYSTEM FOR MOBILE FRAME RACKS
ROUE À SYSTÈME DE DIRECTION INTÉGRÉ POUR CHÂSSIS MOBILES

(30) Priorität: 04.08.2017 DE 202017004094 U
(43) Veröffentlichungstag der Anmeldung: 06.02.2019
(73) Patentinhaber: Croozer GmbH, 50354 Hürth (DE)
(72) Erfinder: Hostmann, Daniel, 86159 Augsburg (DE)
(74) Vertreter: Lenzing Gerber Stute

(56) Entgegenhaltungen:
- GB-A- 151 649
- GB-A- 1 274 441
- US-A- 5 133 223

## Beschreibung

Die Erfindung betrifft ein Rad für fahrbare Rahmengestelle mit einer Achse und einer um die Achse umlaufenden Radnabe.

Fahrbare Rahmengestelle, insbesondere Kinderwagen, Jogger und Multifunktionskinderanhänger, werden üblicherweise über schwenkbare Vorder- und/oder Hinterräder gelenkt oder verfügen über nicht lenkbare an starren Gabeln montierte Räder.

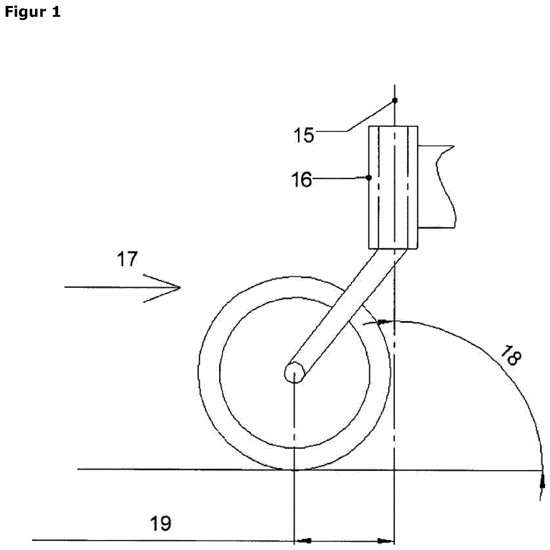

Fig. 1 zeigt eine Ausprägung von schwenkbaren Vorder- und/oder Hinterräder und deren geometrischen Daten.

In Fig. 1 ist das Rad über eine Gabel geführt. Diese Gabel ist relativ zum Rahmen über seine Lenkachse (15) am Steuerkopf (16) schwenkbar gelagert. Der Nachlauf (19) der Räder (Abstand zwischen Aufstandspunkt Rad und dem Punkt in dem die Lenkachse (15) den Boden trifft) wird über eine winkelige Gestaltung der Gabel relativ zur Lenkachse (15) realisiert. Die Richtungsänderung des fahrbaren Rahmengestelles wird durch eine Kraftausübung des Bedieners am Bediengriff seitlich zur Richtung der Fahrt (17) ausgeführt, was zur Folge einer Schwenkbewegung der Gabel und der Räder und somit eine Richtungsänderung des fahrbaren Rahmengestells ermöglicht. Diese Schwenkbewegung ist durch den Nachlauf (19) möglich. Ein positiver Nachlauf (19) ist auch notwendig, um die Räder automatisch in Richtung der Fahrt (17) auszurichten. Um das fahrbare Rahmengestell in alle Richtungen zu bewegen, ist das Rad 360° schwenkbar ausgelegt. Um dies zu realisieren, ist es notwendig den Steuerkopfwinkel (18) (Winkel zwischen Boden und Lenkachse (15) in einen Winkel von ca. 90° senkrecht zum Boden auszurichten. Die potentielle Energie des Rades ist in jeder seiner Schwenkstellungen gleich.

Bei Fahrzeugen, welche für höhere Geschwindigkeiten ausgelegt sind, wie Fahrräder und Motorräder, wird üblicherweise ein Steuerkopfwinkel (18), wie er in Figur 1 dargestellt ist, größer als 90° eingesetzt (oder dementsprechend kleiner 90°, wenn der Winkel zwischen dem Boden in Fahrtrichtung hinter dem Rad und der Lenkachse). Bei einem Steuerkopfwinkel (18) größer als 90° entsteht am Rad ein Maximum der potentiellen Energie genau in Geradeauslage des Rades, was das Fahrzeug für den Geradeauslauf vorteilhaft in ein sogenanntes stabiles Gleichgewicht bringt. Bei Fahrzeugen und fahrbaren Rahmengestellen mit senkrecht zum Boden ausgelegten Steuerkopfwinkeln (18), wie in Fig. 1 dargestellt, ist dieses Gleichgewicht nicht gegeben. Die schwenkbaren Räder neigen bei höheren Geschwindigkeiten, z. B. bei Laufgeschwindigkeit, zum Flattern. Sie bewegen sich unkontrolliert seitlich hin und her.

Ein weiterer Nachteil von schwenkbaren Vorder- und/oder Hinterräder ist, dass die Konstruktion mit außen liegendem Steuerkopf (16) und Steuerkopfhalter relativ viel Platz vorhalten muss. Das vergrößert unnötig den Radstand und damit die Gesamtlänge des fahrbaren Rahmengestells. Speziell bei zusammenklappbaren Kinderwagen und Joggern oder Multifunktionskinderanhängern erhöht das zusätzlich das Packmaß. Um einen Kompromiss zu finden, kommen häufig nur Räder mit kleinem Durchmesser zum Einsatz, z. B. mit einem Außendurchmesser kleiner als 12 Zoll. Der Einsatz von kleinen Rädern führt zu erhöhten Vibrationen bei Fahrten auf nicht asphaltierten Wegen, was wiederum den Einsatzbereich einschränkt.

Um fahrbare Rahmengestelle als Kompromiss auch bei Geschwindigkeiten über der Schrittgeschwindigkeit komfortabel zu bewegen, werden Vorderräder größer gestaltet und/oder an starren ein- oder zweiseitige Gabeln aufgehängt. Das Rad ist somit nicht lenkbar, ermöglicht aber einen stabilen Geradeauslauf, was z. B. bei Läufern, welche Ihre Kinder zum Lauftraining in einem Jogger oder Sportkinderwagen mitnehmen, notwendig ist. Multifunktionskinderanhänger können z. B. mittels optional montierbaren starren Gabeln für die Aufnahme größerer Räder umgebaut werden, um sie als Jogger zu verwenden. Ein Lenken von fahrbaren Rahmengestellen mit starr eingebauten Rädern ist jedoch nur noch möglich über ein Anheben der Räder, danach Drehen des fahrbaren Rahmengestells in die gewünschte Fahrtrichtung und Wiederabsetzen der Räder. Bei dieser konstruktiven Variante werden die Vorteile eines stabilen Geradeauslaufes durch den Einsatz eines oder mehrerer größerer Räder, durch ein nicht gegebenes Lenksystem wieder kompensiert.

Die genannten Probleme werden mit einem Rad mit den in Anspruch 1 aufgeführten Merkmalen zumindest teilweise gelöst. Weitere bevorzugte Ausgestaltungen der Erfindungen ergeben sich aus den Unteransprüchen.

Die Erfindung basiert auf dem Einsatz eines Rades mit einem integrierten Lenksystem, in dem innerhalb der Radnabe eine Schwenk-/Lenkbewegung über einen positiven Nachlauf und einen Steuerkopfwinkel (18) ungleich 90° und insbesondere größer 90° realisiert werden kann. Die Erfindung ermöglicht die Kombination von einem stabilen Geradeauslauf, auch bei höheren Geschwindigkeiten, und einer echten Lenkfunktion.

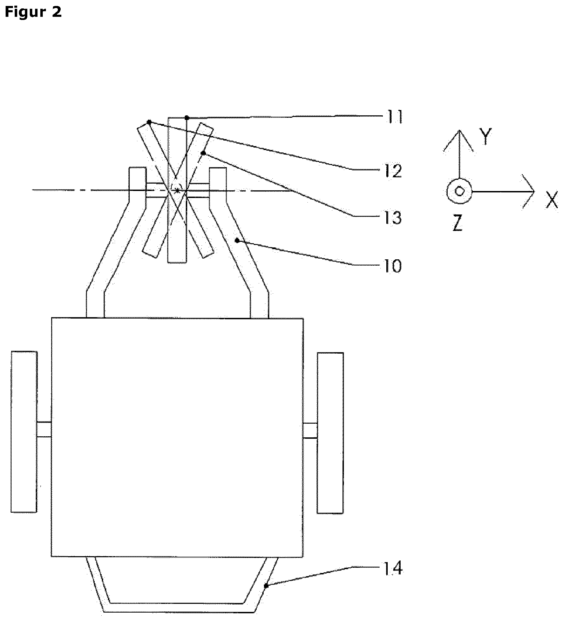

Fig. 2 zeigt eine Ausprägung eines fahrbaren Rahmengestelles mit einem integrierten Lenksystem in einer Draufsicht.

Der Lenkvorgang wird vom Bediener eingeleitet. Über den Bediengriff (14) des fahrbaren Rahmengestelles wird eine Kraft seitlich zur Fahrtrichtung ausgeübt, welche das Rad von seiner Neutralposition (11) in eine Drehbewegung für eine Links- (12) oder Rechtskurve (13) veranlasst. Nach erfolgter Richtungskorrektur kann der Bediener die Lenkkraft am Bediengriff (14) reduzieren und das Rad bewegt sich eigen stabil wieder in seine Neutralposition (11), den Geradeauslauf, zurück. Dies ist bei neutraler Gewichtsverteilung des fahrbaren Rahmengestells und seiner Nutzlast gegeben. Um auch bei nicht neutraler Gewichtsverteilung oder unebenem Gelände einen stabilen Geradeauslauf des Rades zu erzielen, ist in einer vorteilhaften Ausgestaltung der Erfindung gemäß Anspruch 3 ein Rückstellmechanismus realisiert.

Die Erfindung basiert auf der Integration eines Lenksystems innerhalb der Radnabe. So kann konstruktiv auf eine äußere drehbare Gabel- und Steuerkopfkonstruktion verzichtet werden, was platzsparend auf die Gesamtkonstruktion des fahrbaren Rahmengestells positiv einwirkt. Ein weiterer Vorteil der Erfindung ist, dass das Rad mit integriertem Lenkmechanismus auf bereits bestehende Produkte von fahrbaren Rahmengestellen einsetzbar ist. Das Rad bzw. die Räder mit integrierter Lenkfunktion können in vorhandene Radaufnahmen als Nachrüstung eingebracht werden. So können vorhandene fahrbare Rahmengestelle einfach und kostengünstig umgerüstet werden.

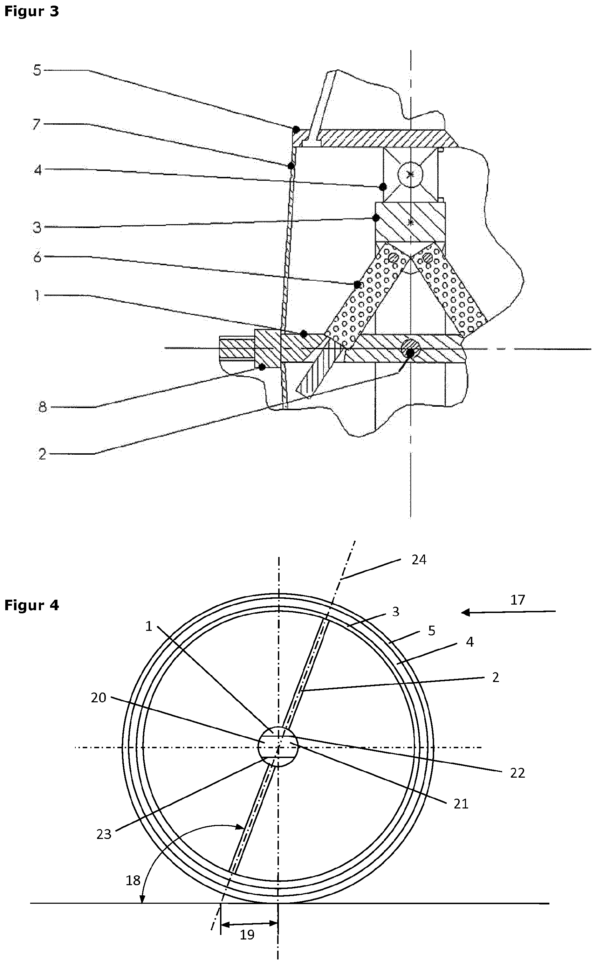

Ein besonderes bevorzugtes Ausführungsbeispiel wird anhand der Fig. 3 erläutert. Es zeigen:
- Fig. 3: den Aufbau eines erfindungsgemäßen Rads mit integrierter Lenkung in Schnittdarstellung, Schnitt senkrecht zur Lenkachse; und
- Fig. 4: das in Fig. 3 dargestellte Rad in Seitenansicht.

Fig. 3 zeigt eine Achse (1), in der in einer Bohrung ein Drehbolzen aufgenommen wird. Die Bohrung und der Drehbolzen fungieren als Steuerkopf (2) der Lenkfunktion. Die Bohrung in der Achse (1) wird in einem entsprechenden Steuerkopfwinkel zum Boden ausgelegt. Dadurch wird der positive Nachlauf des Rades erzielt. Um den Steuerkopfwinkel relativ zum Fahrgestell und Boden sicherzustellen, ist die Achse (1) an seiner Achsenbefestigung (8) mit einem rechteckigen Querschnitt versehen, welche die Achsenbefestigung (8) relativ zur Achsaufnahme an einer Gabel verdrehsicher fixiert. Am Drehbolzen ist ein ringförmiges Schwenkelement (3) schwenkbar befestigt. Das Schwenkelement (3) wird über zwei planare Flächen auf der Achse (1) geführt. Der Drehbolzen fixiert dabei das Schwenkelement (3) mit der Achse (1) und lässt gleichzeitig eine Schwenkbewegung zu. Die ringförmige Gestaltung des Schwenkelementes (3) lässt genügend Freiraum zum Schwenken um die Lenkachse, also die durch die Bohrung und den Bolzen des Steuerkopfs definierte Achse. Das Schwenkelement (3) nimmt an seiner äußeren Kontur eine Lagereinheit (4) auf. An der Lagereinheit (4) ist die Radnabe (5) befestigt. Die Lagereinheit (4) ermöglicht so eine Rotationsbewegung der Radnabe (5) und somit des Rades um die Achse (1). Gleichzeitig ermöglicht die Konstruktion über den innen liegenden Steuerkopf (2) das Schwenken des gesamten Rades um die Lenkachse.

Um das gesamte Rad bzw. die Radnabe (5) ohne Krafteinwirkung sicher in seine Neutralposition zu bringen, sind zwischen Achse (1) und dem Schwenkelement (3) zu beiden Seiten jeweils ein Federelement (6) angebracht. Beide Federelemente (6) sind am Schwenkelement (3) schwenkbar angebracht und werden am anderem Ende durch Öffnungen in der Achse (1) geführt. Beide Federelemente (6) üben auf das Schwenkelement (3) und damit auf das Rad eine gleichmäßige Kraft aus und positionieren das Rad somit in einer senkrechten Neutralposition. Die Federelemente (6) können wahlweise über gummi- elastische Materialien ausgeführt werden oder über Schraubenfedern oder Ähnliches. Um stets eine stabile Neutralposition des Rades, ohne Krafteinwirkung des Bedieners, zu erreichen, sind beide Federelemente (6) so ausgeführt, dass ein Einfedern des Federelementes (6) gegeben ist, aber das Ausfedern über die definierte Länge des elastischen Teils des Federelementes (6) begrenzt ist. So üben immer, ohne Krafteinwirkung des Bedieners, beide Federelemente (6) nur so lange eine Rückstellkraft auf das Schwenkelement (3) aus, bis die Neutralposition erreicht ist. Die Federvorspannung kann je nach Anwendungsbereich und Achslast variiert werden. Wahlweise kann eine Abdeckscheibe (7) auf beiden Seiten der Achse (1) aufgeschoben werden, um die inneren Komponenten vor Feuchtigkeit- und Staubeinwirkung zu schützen.

In Figur 4 ist das Rad mit der Radnabe (5), dem Lagerelement (4) und dem Schwenkelement (3) und des die Achse (1) und das Schwenkelement (3) verbindenden Bolzens (20) als Bestandteil des Steuerkopfs (2) in Seitenansicht dargestellt. Das Ende (21) der Achse (1) hat einen eckigen Querschnitt mit zwei gegenüberliegenden, im Wesentlichen waagerecht verlaufenden Anlagekanten (22, 23), die zu Anlage beispielsweise einer Fläche in einem Ausfallende einer Radgabel dienen, so dass die Achse (1) in einer definierten Position in einer Radgabel montiert werden kann. Die Anlageflächen (22, 23) stehen in einem Winkel von im dargestellten Beispiel etwa 70° zur geometrischen Achse (24) des Bolzens (20). Wird die Achse (1) so in einer Radgabel montiert, dass die Anlageflächen (22, 23) etwa parallel zum Boden verlaufen, ergibt sich ein Nachlauf (19). Der Steuerkopfwinkel 18 der in Fig. 4 dargestellten Konfiguration des Rades beträgt etwa 110°.

Man kann aber ohne weiteres auch auf die Anlageflächen (22, 23) an den Enden der Achse (1) verzichten. Auch ohne derartige Anlageflächen lässt sich das Rad in einer Radgabel so montieren, dass sich ein geeigneter Nachlauf ergibt. Als Montagehilfe sind auch optische Markierungen an der Seite des Rades denkbar (beispielsweise Pfeile zur Anzeige, wo in Fahrtrichtung vorn und wo unten ist), um eine Positionierung des oder der Achsenden in der Radgabel zu vereinfachen.

### Bezugszeichenliste

- 1: Achse
- 2: Steuerkopf
- 3: Schwenkelement
- 4: Lagereinheit
- 5: Radnabe
- 6: Federelement
- 7: Abdeckscheibe
- 8: Achsenbefestigung
- 10: Gabel
- 11: Vorderrad/Neutralposition
- 12: Vorderrad/Linkskurve
- 13: Vorderrad/Rechtskurve
- 14: Bediengriff
- 15: Lenkachse
- 16: Steuerkopf
- 17: Richtung der Fahrt
- 18: Steuerkopfwinkel
- 19: Nachlauf
- 20: Bolzen des Steuerkopfes
- 21: Achsende
- 22: Anlagekante
- 23: Anlagekante
- 24: geometrische Achse des Steuerkopfes/Lenkachse

## Patentansprüche

1. Rad für fahrbare Rahmengestelle mit einer Achse (1), einer um die Achse (1) umlaufenden Radnabe (5) und einen innerhalb der Radnabe (5) an der Achse (1) angeordneten Steuerkopf (2), der mit der Radnabe (5) gekoppelt und um den die Radnabe (5) schwenkbar ist, **dadurch gekennzeichnet, dass** die Achse (1) an ihren äußeren Enden (21) im Querschnitt eckig ausgebildet ist, um einen Steuerkopfwinkel (18) des Rades im Zusammenwirken mit einer Radaufnahme an einem Rahmengestell zu definieren.

2. Rad nach Anspruch 1, **dadurch gekennzeichnet, dass** der Steuerkopf (2) aus einer Bohrung durch die Achse (1) und einem darin aufgenommenen Drehbolzen besteht.

3. Rad nach den Ansprüchen 1 und 2, **dadurch gekennzeichnet, dass** der Winkel zwischen einer durch den eckigen Querschnitt gebildeten Anlegekante (22, 23) am äußeren Ende der Achse (1) und der Längsachse der Achse (1) gebildeten Ebene und einer durch die Bohrung und den Bolzen des Steuerkopfs definierten Achse ungleich 90°, insbesondere in einem Bereich zwischen >90° und < 120°, ist.

4. Rad nach einem der vorhergehenden Ansprüche, **dadurch gekennzeichnet, dass** ein Schwenkelement (3) vorgesehen ist, das mit dem Steuerkopf (2) gekoppelt und auf dem die Radnabe (5) umlaufend drehbar gelagert ist.

5. Rad nach einem der vorhergehenden Ansprüche, **gekennzeichnet durch** mindestens ein Federelement (6), über das das Rad ohne äußere Krafteinwirkung, eine Neutralposition zur Realisierung des Geradeauslaufes einnehmen kann.

6. Rad nach den Ansprüche4 und 5, **dadurch gekennzeichnet, dass** zwischen der Achse (1) und dem Schwenkelement (3) mindestens zwei Federelemente (6) vorgesehen sind, die derart angeordnet sind, dass sie die Radnabe (5) in eine Neutralposition zur Realisierung des Geradeauslaufes bringen können.

7. Rad nach einem der Ansprüche 5 oder 6, **dadurch gekennzeichnet, dass** der elastische Teil des Federelementes (6) unter Einhaltung einer Vorspannung in seiner maximalen Länge begrenzt ist.

8. Rad nach einem der vorhergehenden Ansprüche, **dadurch gekennzeichnet, dass** eine Lagereinheit (4) zwischen dem Schwenkelement (3) und der Radnabe (5) vorgesehen ist, und dass die Lagereinheit (4) und das Schwenkelement (3) als ein integriertes Bauteil ausgeführt ist.

## Claims

1. Wheel for mobile frames comprising an axle (1), a wheel hub (5) rotating around the axle (1) and a control head (2) arranged inside the wheel hub (5) at the axle (1), which control head (2) is coupled to the wheel hub (5) and around which the wheel hub (5) is pivotable, **characterized in that** the axle (1) is angular in cross-section at its outer ends (21) to define a control head angle (18) of the wheel in cooperation with a wheel mount on a frame.

2. Wheel according to claim 1, **characterized in that** the control head (2) consists of a bore through the axle (1) and a pivot pin received therein.

3. Wheel according to claims 1 and 2, **characterized in that** the angle between a plane which is defined by a contact edge (22, 23) formed by the angular cross-section at the outer end of the axle (1) and the longitudinal axis of the axle (1) and an axis defined by the bore and the pin of the control head is unequal to 90°, in particular in a range between >90° and < 120°.

4. Wheel according to one of the preceding claims, **characterized in that** a swivel element (3) is provided which is coupled to the control head (2) and on which the wheel hub (5) is rotatably mounted in a rotating manner.

5. Wheel according to one of the preceding claims, **characterized by** at least one spring element (6), by means of which the wheel can assume a neutral position for realizing the straight running without external application of force.

6. Wheel according to claims 4 and 5, **characterized in that** at least two spring elements (6) are provided between the axle (1) and the swivel element (3), which are arranged in such a way that they can bring the wheel hub (5) into a neutral position for realizing the straight running.

7. Wheel according to one of the claims 5 or 6, **characterized in that** the elastic part of the spring element (6) is limited in its maximum length while maintaining a preload.

8. Wheel according to one of the preceding claims, **characterized in that** a bearing unit (4) is provided between the swivel element (3) and the wheel hub (5), and **in that** the bearing unit (4) and the swivel element (3) are designed as an integrated component.

## Revendications

1. Roue pour châssis mobile avec un essieu (1), un moyeu de roue (5) tournant autour de l'essieu (1) et une tête de commande (2) agencée à l'intérieur du moyeu de roue (5) au niveau de l'essieu (1), laquelle est couplée au moyeu de roue (5) et autour de laquelle le moyeu de roue (5) est pivotant, **caractérisée en ce que** l'essieu (1) est transversalement conçu avec une forme angulaire au niveau de ses extrémités extérieures (21) pour définir au niveau d'un châssis un angle de tête de commande (18) de la roue en coopération avec un logement de roue.

2. Roue selon la revendication 1, **caractérisée en ce que** la tête de commande (2) est constituée d'un alésage à travers l'essieu (1) et d'un boulon pivotant logé à l'intérieur de celui-ci.

3. Roue selon les revendications 1 et 2, **caractérisée en ce que** l'angle entre un plan, formé par un bord d'appui (22, 23) formé par la section transversale angulaire au niveau de l'extrémité extérieure de l'essieu (1) et de l'axe longitudinal de l'essieu (1), et un axe défini par l'alésage et le boulon de la tête de commande est différent de 90°, en particulier dans une plage entre > 90° et < 120°.

4. Roue selon l'une des revendications précédentes, **caractérisée en ce qu'**est prévu un élément pivotant (3) qui est couplé à la tête de commande (2) et sur lequel le moyeu de roue (5) est monté en rotation périphérique.

5. Roue selon l'une des revendications précédentes, **caractérisée par** au moins un élément de ressort (6), via lequel la roue peut occuper, sans action d'une force extérieure, une position neutre pour réaliser la trajectoire rectiligne.

6. Roue selon les revendications 4 et 5, **caractérisée en ce qu'**entre l'essieu (1) et l'élément pivotant (3) sont prévus au moins deux éléments de ressort (6) qui sont agencés de sorte qu'ils puissent amener le moyeu de roue (5) dans une position neutre pour réaliser la trajectoire rectiligne.

7. Roue selon l'une des revendications 5 ou 6, **caractérisée en ce que** la partie élastique de l'élément de ressort (6) est délimitée dans sa longueur maximale, dans le respect d'une tension initiale.

8. Roue selon l'une des revendications précédentes, **caractérisée en ce qu'**est prévue une unité de palier (4) entre l'élément pivotant (3) et le moyeu de roue (5), et **en ce que** l'unité de palier (4) et l'élément pivotant (3) sont exécutés en tant que composant intégré.
